# EUROPÄISCHE PATENTSCHRIFT

(11) **EP 1 388 404 B1**
(45) Veröffentlichungstag und Bekanntmachung des Hinweises auf die Patenterteilung: **28.06.2006**
(21) Anmeldenummer: 02017923.0
(22) Anmeldetag: 09.08.2002
(51) Int. Cl.: B29C 45/82, B29C 45/67, F15B 11/032, F15B 7/10

(54) **Hydraulikaggregat für eine Spritzgiessmaschine**
Hydraulic assembly for an injection moulding machine
Ensemble hydraulique pour une machine de moulage par injection

(30) Priorität: 03.09.2001 DE 10143013
(43) Veröffentlichungstag der Anmeldung: 11.02.2004
(73) Patentinhaber: Bosch Rexroth AG, 97816 Lohr am Main (DE)
(72) Erfinder: Dantlgraber, Jörg, 97816 Lohr (DE)
(74) Vertreter: Winter, Brandl, Fürniss, Hübner Röss, Kaiser, Polte Partnerschaft Patent- und Rechtsanwaltskanzlei

(56) Entgegenhaltungen:
- GB-A- 1 357 956
- US-A- 5 533 336
- US-A- 6 109 036

## Beschreibung

Die Erfindung betrifft ein Hydraulikaggregat zur Betätigung einer Funktionseinheit, beispielsweise einer Schließeinheit oder einer Einspritzeinheit einer Spritzgießmaschine und ein Verfahren zur Ansteuerung der Funktionseinheit.

Ein solches Hydraulikaggregat ist aus US 5 533 336 bekannt.

In der Vergangenheit wurden Spritzgießmaschinen üblicherweise mit hydraulischem Antrieb zur Betätigung der Schließeinheit und der Einspritzeinheit ausgeführt. Derartige hydraulisch betätigte Spritzgießmaschinen haben den Vorteil, dass die Hydraulikkomponenten in der Regel sehr robust ausgeführt sind, so dass ein Betrieb der Spritzgießmaschinen auch bei vergleichsweise geringem Wartungsaufwand und ungünstigen Betriebsbedingungen gewährleistet ist. In jüngster Zeit ist man bestrebt, die Spritzgießmaschinen mit elektrischen Antrieben zu versehen, da deren Ansteuerung zur Prozeßkontrolle mit geringerem Aufwand und mit höherer Präzision erfolgen kann, als es bei hydraulischen Spritzmaschinen der Fall ist. Während die Anwendung rein elektrischer Spritzgießmaschinen auf Anwendungen mit sehr kleinen Schußgewichten beschränkt ist, werden Maschinen mit höheren Schußgewichten mit Funktionseinheiten versehen, die elektrisch betätigt werden, wobei dem elektrischen Antrieb häufig ein Kraftübersetzer nachgeschaltet ist, über den die Funktionseinheit - d.h. beispielsweise die Schließeinheit oder die Einspritzeinheit - betätigt wird.

In der AT 400 941 B ist eine derartige Spritzgießmaschine mit hydraulischem Kraftübersetzer offenbart. Dieser hat eine über eine elektrisch angetriebene Spindel betätigte Kolbenpumpe (Plunger-Pumpe), deren Zylinder - im folgenden Eingangszylinder genannt - als Differentialzylinder ausgeführt ist. Diesem Eingangszylinder ist ein mit einer Einspritzeinheit oder einer Schließeinheit in Wirkverbindung stehender Ausgangszylinder nachgeschaltet, wobei die beiden bodenseitigen Zylinderräume einerseits und die Ringräume der Zylinder andererseits hydraulisch miteinander verbunden sind, so dass ein geschlossener Hydraulikkreislauf gebildet ist. Die Bewegung des Eingangskolbens des Eingangszylinders wird dann hydraulisch in eine entsprechende Stellbewegung des Ausgangszylinders zur Betätigung der Funktionseinheit umgesetzt.

Im Ruhezustand, beispielsweise bei geöffnetem Werkzeug der Spritzgießmaschine muß der Druck im Ringraum in Abhängigkeit von der Flächendifferenz des Ausgangskolbens höher als der Druck im Zylinderraum eingestellt sein, so dass der Ausgangskolben in seiner Grundposition (Form offen) verbleibt.

Problematisch bei dieser Lösung ist, dass es aufgrund der Druckunterschiede zwischen Zylinderraum und Ringraum zu Leckagen kommen kann, bei welchen Druckmittel entlang des Außenumfangs des Kolbens vom Ringraum in den Zylinderraum eintritt. Durch diese Leckage wird der Druck im Ringraum des Ausgangszylinders und entsprechend auch in dem damit verbundenen Ringraum des Eingangszylinders verringert, während der Druck in den beiden Zylinderräumen entsprechend ansteigt. Dies hat zur Folge, dass der Ausgangskolben aufgrund der Leckage von seiner vorbestimmten Endposition verschoben wird, so dass eine ordnungsgemäße Ansteuerung, beispielsweise der Einspritz- oder Schließbewegung nicht mehr gewährleistet ist.

Demgegenüber liegt der Erfindung die Aufgabe zugrunde, ein Hydraulikaggregat zur Betätigung einer Funktionseinheit einer Spritzgießmaschine und ein Verfahren zur Ansteuerung der Funktionseinheit zu schaffen, bei dem auch bei Leckage eine ordnungsgemäße Ansteuerung der Funktionseinheit gewährleistet ist.

Diese Aufgabe wird durch einen Hydraulikaggregat mit den Merkmalen des Patentanspruches 1 und durch ein Verfahren mit den Merkmalen des Patentanspruches 4 gelöst.

Erfindungsgemäß ist das Hydraulikaggregat mit einer Referenziereinrichtung ausgeführt, über die bei einer Leckage zwischen Zylinderräumen eines Kraftübersetzers eine Korrektureinstellung zur Einstellung des Druckes in den Zylindern durchführbar ist. D.h. erfindungsgemäß wird in regelmäßigen Zeitabständen über die Referenziereinrichtung eine Referenzfahrt durchgeführt, bei der der Druck in den Zylindern auf vorbestimmte Sollwerte eingestellt wird, so dass der Einfluß der Leckage kompensiert ist.

Bei dem Referenzierverfahren wird ein von einem elektrischen Antrieb betätigter Eingangszylinder derart angesteuert, dass ein Ausgangskolben eines Ausgangszylinders in eine Endposition gebracht wird (beispielsweise Form offen; Einspritzschnecke von der Düse abgehoben). Anschließend werden die Zylinderräume des Kraftübersetzers hydraulisch miteinander verbunden, so dass alle Zylinderräume mit dem gleichen Druck beaufschlagt sind.

Daraufhin wird der Eingangszylinder weiter angesteuert bis der Druck in einem Druckraum des Ausgangszylinders dem vorbestimmten Vorspanndruck entspricht. Die sich bei Erreichen des Vorspanndruckes ergebende Stellposition des Eingangskolbens des Eingangszylinders entspricht dann der Endposition des Ausgangskolbens - der Kraftübersetzer ist justiert.

Da die Zylinder Differentialzylinder sind, wird sich nach der vorbeschriebenen Justierung des Kraftübersetzers, bei der beide Kolben in eine End- oder Anschlagposition bewegt werden, aufgrund der Flächendifferenz der eingesetzten Differentialzylinder der Eingangskolben von der Endposition wegbewegen bis seine beiden Stirnflächen mit gleich großen Kräften beaufschlagt sind. Durch diese Einstellung des Kräftegleichgewichtes ändert sich der Druck in den Druckräumen der Zylinder. Diese Druckänderung muß bei der Einstellung des Vorspanndruckes berücksichtigt werden.

Erfindungsgemäß hat die Referenziereinrichtung ein Wegeventil, über das Zulauf- und Ablaufleitungen der Zylinder des Druckübersetzers miteinander verbindbar sind, so dass sämtliche Druckräume des Kraftübersetzers mit dem gleichen Druck beaufschlagt sind.

Erfindungsgemäß wird es bevorzugt, wenn der Eingangskolben des Eingangszylinders (Plunger Pumpe) elektrisch über eine Spindel angetrieben wird.

Sonstige vorteilhafte Weiterbildungen der Erfindung sind Gegenstand der weiteren Unteransprüche.

Im folgenden wird ein bevorzugtes Ausführungsbeispiel der Erfindung anhand der schematischen Zeichnung näher erläutert. Es zeigt:

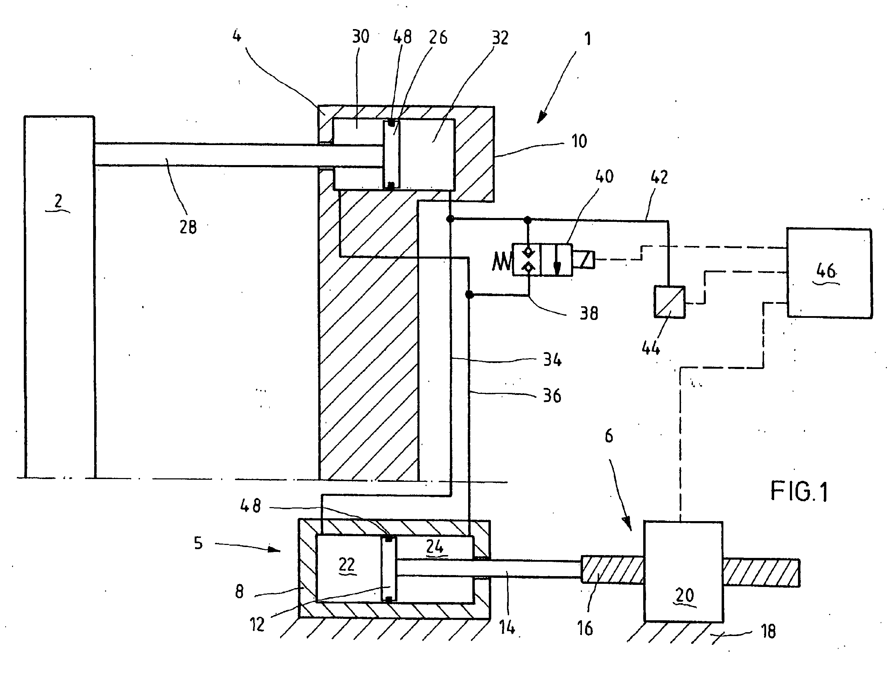

Figur 1 ein Schaubild eines Ausführungsbeispiels eines Hydraulikaggregates zur Betätigung einer Schließeinheit einer Spritzgießmaschine und

In Figur 1 ist ein Grundschaubild einer Schließeinheit 1 einer Zweiplatten-Spritzgießmaschine (SGM) dargestellt. Derartige SGM haben eine bewegliche Werkzeugspannplatte 2 und eine angedeutete feststehende Werkzeugspannplatte 4, an der ein Stellmechanismus 6 zur Betätigung der beweglichen Werkzeugspannplatte 2 abgestützt ist, so dass ein auf den Werkzeugspannplatten 2, 4 festgespanntes Werkzeug geöffnet oder geschlossen werden kann. Des weiteren wird über diesen Stellmechanismus 6 die Zuhaltekraft aufgebracht, die bei hohen Schußgewichten erheblich sein kann. Bei dem in Figur 1 dargestellten Ausführungsbeispiel wird die bewegliche Werkzeugspannplatte 2 durch Aufbringen von Zugkräften geschlossen, so dass die Werkzeugspannplatte 2 in der Ansicht gemäß Figur 1 aus der dargestellten Position "Werkzeug offen" nach rechts in die Schließposition "Werkzeug geschlossen" bewegt wird. Selbstverständlich läßt sich das erfindungsgemäße Konzept auch bei Schließeinheiten 1 anwenden, bei denen der Stellmechanismus 6 an einer Stützplatte der SGM abgestützt ist, so dass die bewegliche Werkzeugspannplatte 2 durch Aufbringen von Druckkräften geschlossen wird.

Bei der in Figur 1 dargestellten Lösung wirkt der Stellmechanismus 6 auf einen Kraftübersetzer, der durch einen Eingangszylinder 8 und einen oder mehrere Ausgangszylinder 10 gebildet ist, die hydraulisch miteinander verbunden sind. Beide Zylinder 8, 10 sind als Differentialzylinder ausgeführt. Der Eingangszylinder 8 hat einen Eingangskolben 12, dessen Kolbenstange 14 mit einer Spindel 16 verbunden ist. Diese Spindel 16 kämmt mit einer am Bett 18 der SGM festgelegten Spindelmutter 20 und ist über einen geeigneten Elektromotor, beispielsweise einen Wechselstrom- oder DrehstromServomotor angetrieben, der sich durch hohe Anfahrtdrehmomente und ein gutes Ansprechverhalten auf Steuersignale zur Axialpositionierung der Spindel 16 auszeichnet. Der Eingangszylinder 8 wird durch den Eingangskolben 12 in einen bodenseitigen Zylinderraum 22 und einen kolbenstangenseitigen Ringraum 24 unterteilt.

Gemäß Figur 1 hat der ebenfalls als Differentialzylinder ausgeführte Ausgangszylinder 10 einen Ausgangskolben 26, dessen Kolbenstange 28 mit der beweglichen Werkzeugspannplatte 2 verbunden ist. Durch den Ausgangskolben 26 wird der Ausgangszylinder 10 in einen Ringraum 30 und einen Zylinderraum 32 unterteilt. Letzterer ist über eine Zulaufleitung 34 mit dem Zylinderraum 22 des Eingangszylinders 8 verbunden. Zwischen den beiden Ringräumen 30 und 24 erstreckt sich eine Ablaufleitung 36. Der wirksame Durchmesser des oder der Ausgangszylinder 10 ist größer als der Durchmesser des Eingangszylinders 8 gewählt, so dass eine Kraftübersetzung erfolgt, die allerdings mit einem größeren Stellweg des Eingangszylinders 8 erkauft wird.

Zwischen der Zulaufleitung 34 und der Ablaufleitung 36 erstreckt sich eine Verbindungsleitung 38, in der ein elektrisch betätigbares Wegeventil 40 angeordnet ist. Dieses sperrt in seiner federvorgespannten Grundposition die Verbindungsleitung 38 leckagefrei ab. Von der Zulaufleitung 34 zweigt des weiteren eine Sensorleitung 42 ab, über die der Druck in den Zylinderräumen 32, 22 abgegriffen und mittels eines Drucksensors 44 erfaßt werden kann. Die Signale des Drucksensors 44 sowie die Ansteuerung des Wegeventils 40 und die Ansteuerung der Spindel 16 erfolgt über eine Referenziereinrichtung 46, die in die Maschinensteuerung integriert sein kann.

Damit der Ausgangskolben 26 nicht aus der dargestellten Position herausgeschoben wird, muß der Druck in den Ringräumen 24, 30 entsprechend der Flächendifferenz der Zylinder 8, 10 größer als der Druck in den Zylinderräumen 22, 32 gewählt sein. Aus Gründen der Steifigkeit wird in den Zylinderräumen 22, 32 ein bestimmter Mindestvorspanndruck eingestellt. Dieser kann über den Drucksensor 44 erfaßt werden.

Obwohl am Außenumfang der Kolben 12, 26 Kolbendichtungen 48 angeordnet sind, kann es aufgrund der Druckdifferenz zwischen den Ringräumen und den Zylinderräumen vorkommen, dass Druckmittel vom Ringraum 24, 30 in den benachbarten Zylinderraum 22 bzw. 32 übertritt. Dadurch sinkt der Druck im Ringraum ab, so dass der Ausgangskolben 26 in der Darstellung gemäß Figur 1 nach links verschoben wird. Eine entsprechende Axialverschiebung des Eingangskolbens 12 erfolgt nicht, da dessen Position durch die Spindel 16 vorgegeben ist.

Die aufgrund der Leckage hervorgerufene Verschiebung des Eingangskolbens 26 kann über ein Wegmeßsystem erfaßt und an die Referenziereinrichtung 46 weitergegeben werden. Entsprechend ist es möglich, die Druckänderungen in den Zylinderräumen 22, 32 über den Drucksensor 44 zu erfassen und daraus auf eine Leckage zurückzuschließen.

Zum Schließen des auf den Werkzeugspannplatten 2, 4 aufgespannten Werkzeuges wird die Spindel in der Darstellung gemäß Figur 1 nach rechts gefahren, so dass entsprechend Druckmittel aus dem Ringraum 24 verdrängt wird und über die Ablaufleitung 36 in den Ringraum 30 strömt. Entsprechend wird das Druckmittel aus dem Zylinderraum 32 über die Zulaufleitung 34 in den Zylinderraum 22 verdrängt - der Kolben 26 wird nach rechts bewegt und eine entsprechende Zugkraft über die Kolbenstange 28 auf die bewegliche Werkzeugspannplatte 2 übertragen. Das Werkzeug wird geschlossen. Zum Öffnen des Werkzeuges wird die Spindel 16 in umgekehrter Drehrichtung angesteuert.

Beim Auftreten einer Leckage wird erfindungsgemäß eine Referenzfahrt durchgeführt.

Zur Kompensation einer derartigen Leckage wird die Spindel 16 derart angesteuert, dass der Eingangskolben 12 nach links bewegt und der Zylinderraum 22 verkleinert wird. Entsprechend wird der Ausgangskolben 26 nach links bis in eine Endposition bewegt, die durch einen Anschlag vorgegeben ist - eine weitere Bewegung des Ausgangskolbens 26 nach links ist nicht möglich.

Dann wird das Wegeventil 40 geöffnet. Daraufhin wird dann die Spindel 16 angesteuert, so dass der Eingangskolben 12 in der Darstellung gemäß Figur 1 nach links bewegt wird. Der Ausgangskolben 26 bleibt dabei gegen seinen Anschlag vorgespannt, so dass das Volumen des Ringraumes 30 minimal ist und das Volumen des Zylinderraumes 32 konstant auf seinem Maximalwert bleibt. Da das Volumen des Ringraumes 30 und des Zylinderraumes 32 während dieser Verschiebung des Eingangskolbens 12 konstant bleibt und die Volumenverringerung des Zylinderraumes 22 größer ist als die Volumenvergrößerung des Ringraumes 24, wird das Gesamtvolumen des Kraftübersetzers 5 während dieser Referenzfahrt verkleinert - der Druck in den Druckräumen steigt dann entsprechend an. Der Eingangskolben 12 wird solange bewegt bis sich in den Zylinderräumen 32, 22 der gewünschte Vorspanndruck einstellt, wobei die vorbeschriebene Drucküberhöhung berücksichtigt wird. Dieser Druck wird durch den Druckaufnehmer 44 erfaßt und bei Erreichen des voreingestellten Wertes ein Signal an die Referenziereinrichtung 46 abgegeben. Diese übernimmt dann die Position des Eingangskolbens 12 als neuen Wert für die Position "Werkzeug vollständig geöffnet". Anschließend wird das Wegeventil 40 geschlossen - die Referenzfahrt ist beendet.

Aufgrund der Kompresssibilität des Druckmittels und der Verwendung von Differentialkolben muß noch eine Druckkompensation erfolgen. Wegen der Flächendifferenz der Kolben 12, 26 wird der Ausgangskolben 26 nach dem Schließen des Wegeventils 40 zunächst in seine Anschlagposition vorgespannt. Bei einer Rückbewegung des Kolbens 12 wird der Ausgangskolben 26 solange gegen seinen Anschlag vorgespannt bleiben bis der Druck in dem sich vergrößernden Zylinderraum 22 und dem zunächst konstant bleibenden Zylinderraum 32 auf einen Wert abgesunken ist, der dem Vorspanndruck entspricht. Dieser Druck liegt um die eingangs beschriebene Druckdifferenz unterhalb des Druckes in den Ringräumen 30, 24. Erst nach Erreichen dieser Druckdifferenz hebt der Ausgangskolben 26 dann von seinem Anschlag ab und kann zum Schließen des Werkzeuges nach rechts bewegt werden. Diese Druckänderung in den Zylinderräumen 32, 22 nach der Referenzfahrt muß bei der Einstellung des Vorspanndruckes vorgehalten werden. Bei einer derartigen Einstellung des Vorspanndruckes ist die Schließeinheit dann nach der Referenzfahrt wieder justiert und einsatzbereit.

Bei Druckänderungen im Kraftübersetzer aufgrund von Temperaturschwankungen erfolgt die Referenzierung in entsprechender Weise.

Selbstverständlich kann das vorbeschriebene Konzept zur Kompensation von Leckagen auch bei anderen Funktionseinheiten einer Kunststoffverarbeitungsmaschine, beispielsweise bei einer Einspritzeinheit einer Spritzgießmaschine oder sonstigen Betätigungselementen eingesetzt werden.

Offenbart ist eine Vorrichtung und ein Verfahren zur Ansteuerung einer Funktionseinheit einer Spritzgießmaschine. Diese hat einen elektrischen Antrieb, der über einen Stellmechanismus und einen hydraulischen Kraftübersetzer in Wirkverbindung mit der Funktionseinheit, beispielsweise einer Schließ- oder Einspritzeinheit steht. Der Kraftübersetzer hat einen Eingangszylinder und einen Ausgangszylinder, die hydraulisch miteinander verbunden sind. Bei Auftreten einer Leckage wird über eine Referenziereinrichtung ein Referenzierzyklus durchfahren, bei dem die Drücke in den Druckräumen des Kraftübersetzers von dem durch die Leckage veränderten Ist-Werten auf vorbestimmte Soll-Werte korrigiert werden.

### Bezugszeichenliste:

- 1: Schließeinheit
- 2: bewegliche Werkzeugspannplatte
- 4: feststehende Werkzeugspannplatte
- 5: Kraftübersetzer
- 6: Stellmechanismus
- 8: Eingangszylinder
- 10: Ausgangszylinder
- 12: Eingangskolben
- 14: Kolbenstange
- 16: Spindel
- 18: Bett
- 20: Spindelmutter
- 22: Zylinderraum
- 24: Ringraum
- 26: Ausgangskolben
- 28: Kolbenstange
- 30: Ringraum
- 32: Zylinderraum
- 34: Zulaufleitung
- 36: Ablaufleitung
- 38: Verbindungsleitung
- 40: Wegeventil
- 42: Sensorleitung
- 44: Drucksensor
- 46: Referenziereinrichtung
- 48: Kolbendichtung

## Patentansprüche

1. Hydraulikaggregat zur Betätigung einer Funktionseinheit einer Spritzgießmaschine, beispielsweise einer Schließ- oder Einspritzeinheit, mit einem Antrieb, der über einen Stellmechanismus (6) und einen hydraulischen Kraftübersetzer (5) in Wirkverbindung mit der Funktionseinheit (1) steht, wobei der Kraftübersetzer (5) einen Eingangszylinder (8) und einen Ausgangszylinder (10) hat, die hydraulisch miteinander verbunden sind, so daß eine Stellbewegung des Eingangszylinders in eine entsprechende Bewegung des Ausgangszylinders umsetzbar ist, wobei die Zylinder (8, 10) Differentialzylinder sind, deren bodenseitige Zylinderräume (22, 32) und kolbenstangenseitige Ringräume (24, 30) jeweils hydraulisch über eine Zulaufleitung (34) bzw. eine Ablaufleitung (36) miteinander verbunden sind, **dadurch gekennzeichnet, dass** die Druckräume (22, 24; 30, 32) mit Vorspanndruck beaufschlagt sind, wobei zur Kompensation einer Leckage zwischen den Druckräumen (22, 24; 30, 32) eine Referenziereinrichtung (46) vorgesehen ist, mittels der eine Korrektureinstellung der Drücke durchführbar ist, und wobei ein Wegeventil (40) zur Verbindung der Zulauf- und Ablaufleitung (34, 36) vorgesehen ist.

2. Hydraulikaggregat nach Patentanspruch 1, wobei der Stellmechanismus (6) eine vom Antrieb angetriebene Spindel (16) hat, die mit dem Eingangskolben (12) des Eingangszylinders (8) verbunden ist.

3. Hydraulikaggregat nach einem der vorhergehenden Patentansprüche, mit einem Drucksensor (44), über den der Druck in den Zylindern (8, 10) erfaßbar ist.

4. Verfahren zur Ansteuerung einer Funktionseinheit einer Sprizgießmaschine, beispielsweise einer Schließ- oder Einspritzeinheit, mit einem elektrischen Antrieb, der über einen Stellmechanismus (6) und einem hydraulischen Kraftübersetzer (5) in Wirkverbindung mit der Funktionseinheit steht, wobei der Kraftübersetzer (5) einen Eingangszylinder (8) und einen Ausgangszylinder (10) hat, die hydraulisch miteinander verbunden sind, so daß eine Stellbewegung des Eingangszylinders (8) in eine entsprechende Bewegung des Ausgangszylinders (10) umgesetzt wird, wobei die Zylinder (8, 10) Differentialzylinder sind, deren bodenseitige Zylinderräume (22, 32) und kolbenstangenseitige Ringräume (24, 30) jeweils hydraulisch über eine Zulaufleitung (34) bzw. eine Ablaufleitung (36) miteinander verbunden sind, **dadurch gekennzeichnet, dass** die Druckräume (22, 24; 32, 34) mit Vorspanndruck beaufschlagt werden und bei Auftreten einer Leckage zwischen Druckräumen (30, 32; 22, 24) der Zylinder (8, 10) oder bei Druckänderungen aufgrund von Temperaturschwankungen ein Referenzierzyklus durchfahren wird, bei dem die Drücke in den Druckräumen (22, 32; 24, 30) der Zylinder (8, 10) von den durch die Leckage veränderten Ist-Werten in Soll-Werte korrigiert werden, und wobei beim Durchfahren eines Referenzierzykluses zur Herstellung einer Verbindung zwischen der Zulaufleitung (34) und der Ablaufleitung (36) ein Wegeventil (40) geschaltet wird.

5. Verfahren nach Patentanspruch 4, wobei der Druck in den Zylindern (8, 10) über einen Drucksensor (44) erfaßbar ist und der Referenzierzyklus folgende Schritte enthält:
- Ansteuern des Eingangszylinders (8) derart, daß ein Ausgangskolben (26) des Ausgangszylinders (10) in eine Anschlagposition gebracht wird,
- Öffnen des Wegeventils (40) zur Verbindung von Zu- und Ablaufleitung (34, 36);
- Verfahren eines Eingangskolbens (12) des Eingangszylinders (8) derart, daß ein Ausgangskolben (26) des Ausgangszylinders (10) in einer Anschlagposition steht und der Druck in einem Druckraum (32, 22) einem vorbestimmten Vorspanndruck entspricht;
- Erfassen und Speichern der Position des Eingangskolbens (12) bei Erreichen des Vorspanndruckes;
- Schließen des Wegeventils (40).

6. Verfahren nach Patentanspruch 5, mit den weiteren Schritten:
- Rückbewegung des Eingangskolbens (12);
- Erfassen der Druckänderung in den Zylinderräumen (22, 32) zu Beginn der Kolbenrückbewegung und
- Speichern der Druckänderung und Einstellen des Vorspanndruckes in Abhängigkeit von der Druckänderung.

## Claims

1. Hydraulic assembly for operating a functional unit of an injection moulding machine, for example a clamping or injection unit, with a drive which is actively connected to the functional unit (1) via an adjusting mechanism (6) and a hydraulic power translator (5), said power translator (5) having an inlet cylinder (8) and an outlet cylinder (10) which are hydraulically interconnected, so that an adjusting movement of the inlet cylinder may be converted into a corresponding movement of the outlet cylinder, the cylinders (8, 10) being differential cylinders, the base-side cylinder chambers (22, 32) of which and the piston rod-side annular chambers (24, 30) of which are each interconnected hydraulically via a supply line (34) or a return line (36), **characterised in that** the pressure chambers (22, 24; 30, 32) are subjected to biasing pressure, a reference instrument (46) being provided to compensate a leakage between the pressure chambers (22, 24; 30, 32) and by means of which it is possible to make a correction adjustment of the pressures, a directional control valve (40) being provided to connect the supply line (34) and the return line (36).

2. Hydraulic assembly according to claim 1, wherein the adjusting mechanism (6) has a spindle (16) which is powered by the drive and is connected to the inlet piston (12) of the inlet cylinder (8).

3. Hydraulic assembly according to any one of the preceding claims, comprising a pressure sensor (44) which is able to detect the pressure in the cylinders (8, 10).

4. Method for activating a functional unit of an injection moulding machine, for example a clamping or injection unit, with an electric drive which is actively connected to the functional unit via an adjusting mechanism (6) and a hydraulic power translator (5), the power translator (5) having an inlet cylinder (8) and an outlet cylinder (10) which are hydraulically connected so that an adjusting movement of the inlet cylinder (8) is converted into a corresponding movement of the outlet cylinder (10), the cylinders (8, 10) being differential cylinders, the base-side cylinder chambers (22, 32) of which and the piston rod-side annular chambers (24, 30) of which are each interconnected hydraulically via a supply line (34) or a return line (36), **characterised in that** the pressure chambers (22, 24; 32, 34) are subjected to biasing pressure and, should a leakage occur between pressure chambers (30, 32; 22, 24) of the cylinders (8, 10) or where there are changes in pressure due to fluctuations in temperature, a reference cycle is carried out, in which the pressures in the pressure chambers (22, 32; 24, 30) of the cylinders (8, 10) are corrected from the actual values altered by the leakage to the required values, and a directional control valve (40) being connected to produce a connection between the supply line (34) and the return line (36) while passing through a reference cycle.

5. Method according to claim 4, wherein the pressure in the cylinders (8, 10) may be detected by a pressure sensor (44) and the reference cycle comprises the following steps: activating the inlet cylinder (8) such that an outlet piston (26) of the outlet cylinder (10) is brought into a stop position; opening the directional control valve (40) to connect the supply line (34) and the return line (36); moving an inlet piston (12) of the inlet cylinder (8) such that an outlet piston (26) of the outlet cylinder (10) is in a stop position and the pressure in a pressure chamber (32, 22) corresponds to a predetermined biasing pressure; detecting and storing the position of the inlet piston (12) upon reaching the biasing pressure; and closing the directional control valve (40).

6. Method according to claim 5, comprising the further steps: moving back the inlet piston (12); detecting the pressure change in the cylinder chambers (22, 32) at the start of the piston return movement; and storing the pressure change and adjusting the biasing pressure as a function of the change in pressure.

## Revendications

1. Groupe hydraulique destiné actionner une unité fonctionnelle, telle qu'une unité de fermeture ou une unité d'injection, d'une machine de moulage par injection, comportant un systeme d'entraînement qui est en liaison active avec l'unité fonctionnelle (1) par l'intermédiaire d'un mécanisme de réglage (6) et d'un transformateur de force hydraulique (5), ledit transformateur de force (5) comportant un vérin d'entrée (8) et un vérin de sortie (10), qui sont reliés l'un l'autre par voie hydraulique, de telle sorte qu'un mouvement de réglage du vérin d'entrée peut être transformé en un mouvement correspondant du vérin de sortie, les vérins (8, 10) étant des vérins différentiels dont les chambres cylindriques (22, 32) du c^té fond et les chambres annulaires (24, 30) du c^té tige de piston communiquent l'une avec l'autre par voie hydraulique par l'intermédiaire respectivement d'une conduite d'admission (34) et d'une conduite d'évacuation (36), **caractérisé en ce que** les chambres de pression (22, 24 ; 30, 32) sont sollicitées par une pression de précontrainte, une fuite entre les chambres de pression (22, 24 ; 30, 32) pouvant être compensée par un dispositif de référence (46), qui est prévu cet effet et qui permet d'effectuer un réglage correctif des pressions, et un distributeur (40) étant prévu pour la liaison entre la conduite d'admission (34) et la conduite d'évacuation (36).

2. Groupe hydraulique selon la revendication 1, dans lequel le mécanisme de réglage (6) comporte une broche (16), qui est actionnée par le systeme d'entraînement et qui est reliée au piston d'entrée (12) du vérin d'entrée (8).

3. Groupe hydraulique selon l'une quelconque des revendications précédentes, comportant un capteur de pression (44), qui permet d'enregistrer la pression dans les vérins (8, 10).

4. Procédé d'activation d'une unité fonctionnelle, telle qu'une unité de fermeture ou une unité d'injection, d'une machine de moulage par injection, comportant un systeme d'entraînement électrique, qui est en liaison active avec l'unité fonctionnelle (1) par l'intermédiaire d'un mécanisme de réglage (6) et d'un transformateur de force hydraulique (5), ledit transformateur de force (5) comportant un vérin d'entrée (8) et un vérin de sortie (10), qui sont reliés l'un l'autre par voie hydraulique, de telle sorte qu'un mouvement de réglage du vérin d'entrée (8) est transformé en un mouvement correspondant du vérin de sortie (10), les vérins (8, 10) étant des vérins différentiels dont les chambres cylindriques (22, 32) du c^té fond et les chambres annulaires (24, 30) du c^té tige de piston communiquent l'une avec l'autre par voie hydraulique par l'intermédiaire respectivement d'une conduite d'admission (34) et d'une conduite d'évacuation (36), **caractérisé en ce que** les chambres de pression (22, 24 ; 30, 32) sont sollicitées par une pression de précontrainte et, en présence d'une fuite entre les chambres de pression (30, 32 ; 22, 24) des vérins (8, 10) ou en cas de variations de pression dues des variations de température, il est mis en oeuvre un cycle de référence pendant lequel les valeurs réelles, modifiées par la fuite, des pressions dans les chambres de pression (22, 32 ; 24, 30) des vérins (8, 10) sont corrigées en valeurs de consigne et un distributeur (40) étant commuté pendant la mise en oeuvre du cycle de référence pour établir une liaison entre la conduite d'admission (34) et la conduite d'évacuation (36).

5. Procédé selon la revendication 4, dans lequel la pression dans les vérins (8, 10) peut être enregistrée par un capteur de pression (44) et dans lequel le cycle de référence comporte les étapes suivantes :
- activation du vérin d'entrée (8) de telle sorte qu'un piston de sortie (26) du vérin de sortie (10) est amené dans une position de butée ;
- ouverture du distributeur (40) pour établir la liaison entre la conduite d'admission (34) et la conduite d'évacuation (36) ;
- déplacement d'un piston d'entrée (12) du vérin d'entrée (8) de telle sorte qu'un piston de sortie (26) du vérin de sortie (10) est dans une position de butée et la pression dans une chambre de pression (32, 22) correspond une pression de précontrainte prédéfinie ;
- enregistrement et mise en mémoire de la position du piston d'entrée (12) au moment de l'obtention de la pression de précontrainte ;
- fermeture du distributeur (40).

6. Procédé selon la revendication 5, comportant les étapes supplémentaires :
- mouvement de retour du piston d'entrée (12) ;
- enregistrement de la variation de pression dans les chambres cylindriques (22, 32) au début du mouvement de retour du piston, et
- mise en mémoire de la variation de pression et réglage de la pression de précontrainte en fonction de la variation de pression.
